# EUROPEAN PATENT SPECIFICATION

(11) **EP 2 077 206 B1**
(45) Date of publication and mention of the grant of the patent: **18.08.2010**
(21) Application number: 08253686.3
(22) Date of filing: 11.11.2008
(51) Int. Cl.: B60R 21/05

(54) **Steering lock device**
Lenkschloßvorrichtung
Dispositif de verrouillage de direction

(30) Priority: 30.11.2007 JP 2007310778
(43) Date of publication of application: 08.07.2009
(73) Proprietor: U-Shin Ltd., Minato-ku, Tokyo-to (JP)
(72) Inventor: Tanioka, Daisuke, Hiroshima-ken (JP)
(74) Representative: Calderbank, Thomas Roger

(56) References cited:
- EP-A- 1 380 480
- FR-A- 2 822 909

## Description

The present invention relates to a steering lock device adapted to lock steering operation for a vehicle.

The conventional steering lock device for a vehicle adapted to lock steering operation for the antitheft purpose is provided on an outer peripheral surface of a steering shaft adapted to be rotated by steering operation with an engagement recess.

In synchronization with response to operation of stopping the engine by a vehicle driver using a key or the other means, a to-and-fro movable lock bolt moves ahead into engagement with said engagement recess to restrict rotation of the steering shaft. In this way, the steering shaft is locked so that the steering operation can not be done.

In synchronization with operation of starting the engine by the driver using the key, said lock bolt is moved back and disengaged from said engagement recess, releasing the steering shaft from the restriction. In this way, the steering shaft is unlocked so that the steering operation can be carried out.

It will be appreciated that the engagement recess of the steering shaft is often out of alignment with a position at which the lock bolt is provided at a moment of advancing the lock bolt toward the steering shaft.

In view of this problem, the conventional steering lock device is provided with biasing means adapted to bias the lock bolt to be moved forward.

Incorporation of the biasing means allows the driver may rotate the steering shaft until the lock bolt is aligned with the engagement recess whereupon the lock bolt plunges into the engagement recess under the effect of the biasing means without need to start the engine by use of a key or the like in order to carry out operation of unlocking.

One of the prior art documents relating to such steering lock device is Japanese Patent Application Laid-Open Publication No. 2005-343378.

This PATENT DOCUMENT discloses a steering lock device provided with a cam mechanism adapted to actuate a lock bolt to move to a locked position or an unlocked position.

In the case of this steering lock device of prior art, an electric motor actuating the lock bolt is fixed within a casing and the electric motor is power-supplied from the vehicle.

Specifically, a connector on the vehicle side connected to a main microcomputer (ECU) loaded on the vehicle is electrically connected to a connector extending out from a casing of the steering lock device so that a control board power-supplied from this connector via a printed substrate and terminals causes the electric motor to be normally rotated or reversely rotated.

Document EP-A-1 380 480 discloses a similar prior art system according to the preamble of claim 1.

In order to improve the antitheft effect, the steering lock device conventionally devises various countermeasures, for example, making the device not visible externally, making it difficult to operate the device directly, and enhancing a degree of freedom of layout for switching devices or the other components disposed around the steering column cover of the steering shaft by mounting the steering lock device to the lower portion of the steering shaft on the innermost side (the front side of vehicle) within the steering column cover.

However, the high antitheft effect is required for such steering lock device as has been described above and the various components such the lock bolt and the electric motor are usually housed within the housing molded from zinc or the like hard material and the lower portion of the steering shaft lies immediately in front of and opposed to the knees of the driver sitting on the cab seat.

When the driver is thrown forward by impact in the case of collision accident of the vehicle, there is a possibility of so-called secondary collision such that the driver's knees may burst through the steering column cover and collide the housing of the steering lock device.

Within the steering column cover, the position-adjusting device (e.g., tilt steering device or telescopic steering device) is provided to adjust the position of the steering handle depending on the driver's physical size or predilection.

Similarly to the steering lock device, such position-adjusting device is also provided in the innermost side (the front side of the vehicle) with respect to the steering shaft.

Particularly, the tilt lever for control of the tilt steering device (height-adjusting device) is supported on the side surface so as to extend outward from the interior of the steering column cover and the distal end of this lever is provided with the control knob which is bent so as to lie on the middle level of the steering column cover.

The steering column cover comprises the upper cover and the lower cover and, after the tilt steering device has been attached to the steering shaft, the steering column cover is covered from above and below. Therefore, the bottom of the lower cover of the steering column cover must be formed with the opening through which the tilt lever of the tilt steering device and the control knob thereof can extend outward.

Consequentially, various metallic parts such as the steering shaft and various metallic parts are visible externally, adversely affecting the appearance of the instrument panel of which the design is very important, and making the appearance unattractive.

To solve this problem, various countermeasures have been implemented, for example, a cover has been separately provided to close the opening.

In view of the problems as have been described above, it is a first preferred aim of the present invention to assure a safety from the secondary collision of the driver with the steering lock device and it is a second preferred aim of the present invention to close the opening of the steering column cover through the control knob of the tilt lever in order to improve visual quality of the peripheral region of the steering column.

The first aim set forth above may be achieved, according to the invention, by an improvement in the steering lock device comprising a lock bolt adapted to be to-and-fro movable between a locked position at which the lock bolt is engaged with a steering shaft coupled to a steering wheel and an unlocked position at which such engagement is released, an actuator causing the lock bolt to move, a transmission mechanism adapted to transmit a driving force from the actuator to the lock bolt so as to move the lock bolt toward the locked position or the unlocked position, and a housing with a cover adapted to house at least the lock bolt, said actuator and the transmission mechanism. The improvement according to the invention is characterized in that a cover member adapted to cover side walls and a bottom of the housing, and an elastic buffering member provided between the cover member and the housing.

The second aim set forth above may be achieved,according to the invention, by an improvement in the steering lock device characterized in that the device further comprises a steering column pipe rotatably supporting the steering shaft, a position-adjusting device adapted to position-adjusting the steering shaft in a vertical direction of the steering column pipe, a control lever provided at one end with a control knob adapted to be operated so as to switch the position-adjusting device between a position-adjustable state and a position-nonadjustable state in a selective manner, a steering column cover integrally attached to the steering shaft so as to cover the steering shaft, the position-adjusting device and the control lever, a control lever insertion hole and a control knob insertion hole provided in the bottom of the steering column cover, and the control knob insertion hole is closed with the cover member of the steering lock device mounted on the steering shaft.

In the steering lock device of the aforementioned construction, the housing made of hard material is provided on its outer peripheral surface with the elastic buffering member so that, even if the driver's knees collide with the steering lock device by a shock due to the vehicle's collision accident, the buffering member may sufficiently alleviate a collision shock to protect the driver from a serious damage and to assure the safety against the secondary collision.

Furthermore, the buffering member covering the space for the lock mechanism within the housing is effective also to absorb the sound generated within the steering lock device and leaking externally when the lock bolt is actuated by the electric motor.

In addition to the advantages as have been described above, the unique construction of the steering lock device according to the invention such that the opening formed in the steering column cover for passage of the control knob of the position-adjusting device is closed with the cover member for the steering lock device makes it unnecessary to prepare a separate cover member in order to close the opening formed in the steering column cover for passage of the control knob.

In the drawings:
Fig. 1 is a sectional view showing the steering lock device according to an embodiment of the present invention is a locked position.
Fig. 2 is an exploded perspective view of the lock device and the bracket.
Fig. 3 is a perspective view of the lock device together with the cover member mounted thereon.
Fig. 4 is an exploded perspective view of the lock device and the cover member.
Fig. 5 is a perspective view showing, partially in a sectional view, the lock device mounted on the steering shaft.
Fig. 6 is a sectional view taken along a line 6-6 in Fig. 5.
Fig. 7 is a bottom view of the steering column cover before the lock device is mounted on the steering shaft.
Fig. 8 is a bottom view of the steering column cover after the lock device has been mounted on the steering shaft.
Fig. 9 (a) is a partially scale-enlarged view showing the slide engagement pit formed in the outer column tube of the steering shaft and Fig. 9(b) is a sectional view taken along a line 9b-9b in Fig. 9(a) and Fig. 9(c) is a sectional view of the protuberance of the lock device taken along a line 9c-9c in Fig. 6.

Details of the steering lock device will be more fully understood from the description of the embodiment given hereunder in reference with the accompanying drawings.

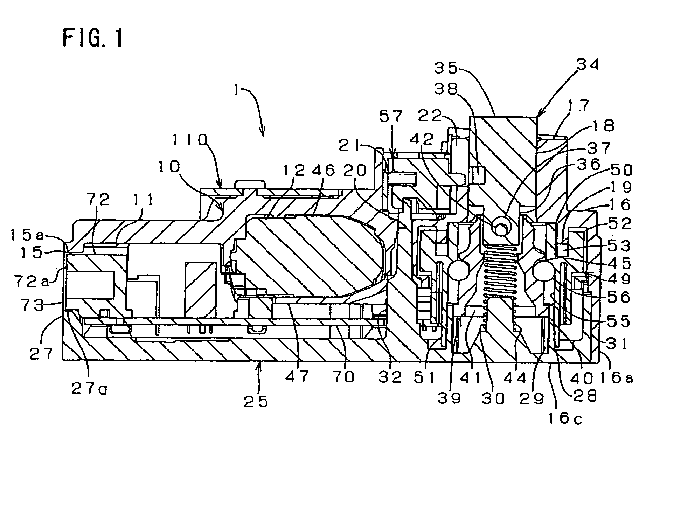

Figs. 1 through 4 illustrate the steering lock device 1 (referred to hereinafter simply as "lock device").

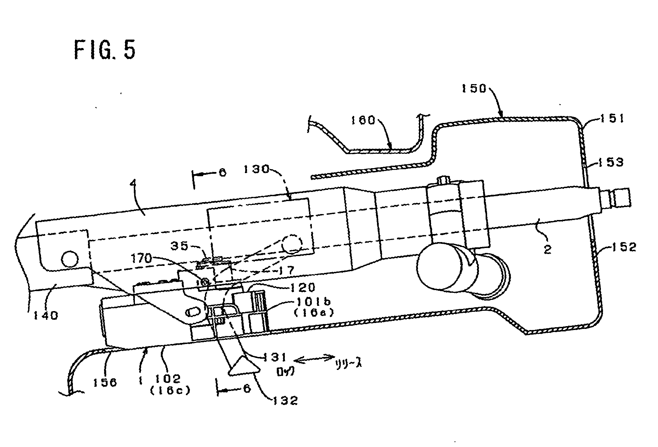

As will be appreciated from Fig. 5 through Fig. 9, this lock device 1 is disposed around a steering shaft 2 adapted to be rotated in synchronization with operation of rotating a steering handle (not shown) and operates in association with operation of a push switch or user's card key (both not shown) used for starting or stoppage of an engine or the like.

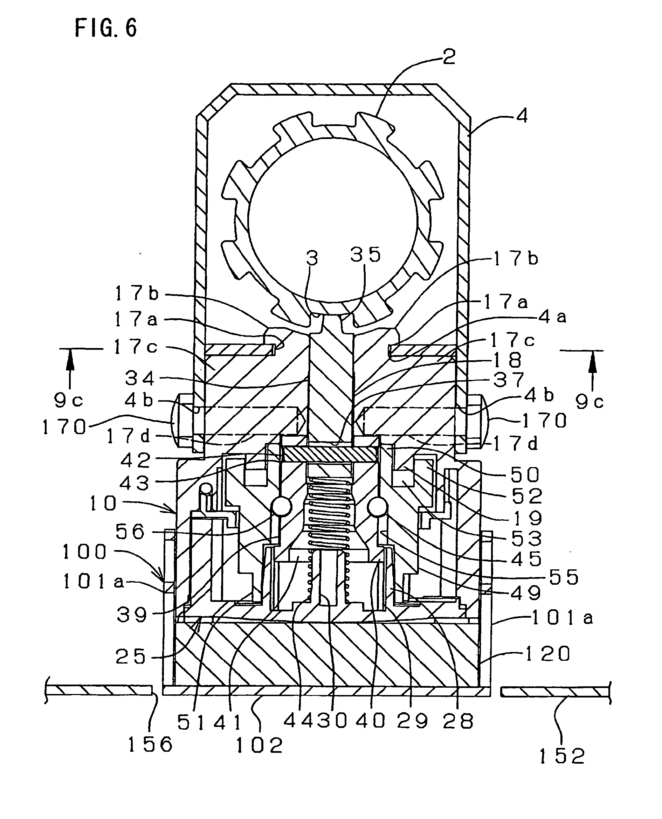

As shown by Fig. 6, the steering shaft 2 is formed at predetermined level in an axial direction on its peripheral surface with a plurality of engagement recesses 3 at regular intervals in a circumferential direction.

As will be apparent from Fig. 1, the lock device 1 according to this embodiment includes an one side open housing 10 and a housing cover 25 and comprises, within this, a lock bolt 34, an electric motor 46 serving as an actuator, a transmission mechanism and an auxiliary lock mechanism 57 adapted to control a to-and-fro movement of the lock bolt 34.

The lock device further includes a control board 70 adapted to control the electric motor 46 on the based on an actual position of the lock bolt 34.

The housing 10 is provided in the form of one side opened rectangular container molded from metallic material such as zinc and having therein a space 11 for the control board 70 on one side and a space 16 for the lock mechanism on the other side.

The space 11 for control board is adapted to house the electric motor 46 and the control board 70 serving to control the electric motor 46. To this end, the space 11 is formed with a cavity 12 in conformity to a contour of the electric motor 46.

The space 11 for the control board is further provided with bosses (not shown) used to screw clamp a motor cover 47 and thereby to position the electric motor 46 and bosses (not shown) used to screw clamp a housing cover 25.

The space 11 for the control board is further provided on the side wall opposed to the space 16 for the lock mechanism with a notch 15 in which an outer end surface 72a of an electric connector 72 is exposed.

The space 16 for the lock mechanism is adapted to contain the lock bolt 34 and the transmission mechanism and has a protuberance extending in a direction opposed to the open side.

This protuberance 17 is provided with a lock bolt insertion hole 18 extending therethrough along a direction in which the housing cover 25 is mounted.

In the space 16 for the lock mechanism, there is further provided around the lock bolt insertion hole 18 with a first supporting protuberance 19 annularly extending inward and rotatably supporting a rotator member 49 which will be described later.

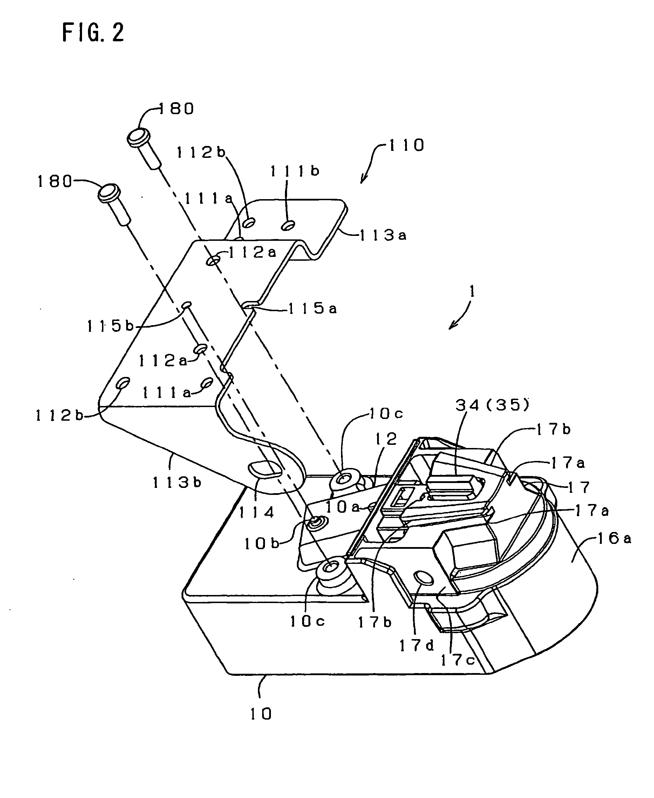

According to this embodiment, as shown by Figs. 2 through 4 and Fig. 9(a), an upper surface (i.e., upper side as viewed in Fig. 2) of the protuberance 17 formed with the lock bolt insertion hole 18 has a substantially trapezoidal cross-section defined by a slope extending from the side of a front surface 16a (i.e., right side as viewed in Fig. 2) of the space 16 for lock mechanism of the housing 10 toward the side of a rear surface 16b (i.e. , left side as viewed in Fig. 2), in which the connector 72 of the control board 70 is exposed, of the space 11 for the control board.

Opposite sloped side walls of the protuberance 17 are formed fully along the slope with slide grooves 17a and the upper surface of the protuberance 17 are formed just above these slide grooves 17a with collars 17b.

Opposite side surfaces of the housing 10 defined in a lower part (i.e., lower side as viewed in Fig. 2) of this protuberance 17 are formed with laterally extending convex portions 17c which are, in turn, formed with screw-insertion holes 17d used to secure outer column tubes 4 of the steering shaft 2, which will be described later, with bolts 170.

An upper surface of the space 11 for the control board defined at a level lower than the protuberance 17 of the space 16 for the lock mechanism of the housing 10 is provided, as shown by Fig. 2, with two threaded holes 10c associated with two screw-insertion holes 112a of a bracket 110 which will be described later, a positioning rib 10b projecting from the upper surface of the cavity 12 housing the electric motor 46 and a positioning rib 10a horizontally projecting from a joint between a side surface of the protuberance 18 and the upper surface of the cavity 12.

The threaded holes 10c are formed so as to protuberate to the same level of the upper surface of the cavity 12.

As will be apparent from Fig. 1, the protuberance 17 of the space 16 for the lock mechanism is formed with a through-hole 20 extending in parallel to the lock bolt insertion hole 18 in the direction along which the housing cover 25 is mounted.

This through-hole communicates with a space for an auxiliary lock mechanism 57 which is concaved inward from the outer surface of the protuberance 17.

The auxiliary lock mechanism 57 is to restrict to-and-fro movement of the lock bolt in the situation of the housing 10 for the lock device 1 having been disassembled (destroyed) and thereby to prevent illicit unlocking. However, the auxiliary lock mechanism has no direct relationship with the present invention and therefore details thereof will not be described herein.

The housing cover 25 is used to close the open side of the housing 10 and may be secured to the housing 10 by threadably engaging screws or the like with bosses (not shown) projecting from the inner walls of the housing 10.

The housing cover 25 has a convex wall 27 extending into the notch 15.

This convex wall 27 partially closes the notch 15.

In this way, the notch 15 cooperates with the convex wall 27 to define an opening 73 through which the outer end surface 72a of the connector 72 is exposed.

The outer end surface 72a of the connector 72 is surrounded by an edge 15a of the notch 15 of the housing 10 and an edge 27a of the convex wall 27 of the housing cover 25.

At a position properly opposed to the first supporting protuberance 19 provided in the space 16 of the lock mechanism, there is provided a second annular supporting protuberance 28 which rotatably supports the other end of the rotator member 49.

This second supporting protuberance 28 is provided on its inner peripheral surface with a plurality of lock bolt guide grooves 29 at regular intervals in the circumferential direction.

The housing cover 25 includes a locking prong 32 formed integrally therewith so as to extend through the through-hole 20 of the housing 10 into engagement with the auxiliary lock mechanism 57 in its inactive state and thereby to keep the auxiliary lock mechanism in its inactive state relative to the lock bolt 34.

A plate-like bracket 110 is adapted to be integrally attached to the upper surface of the space 11 for the control board and provided with positioning grooves 115a, 115b operatively associated with the positioning ribs 10a, 10b of the space 11 for the control board, respectively, and a pair of threaded through-holes 112a adapted to receive respective fixing bolts 180.

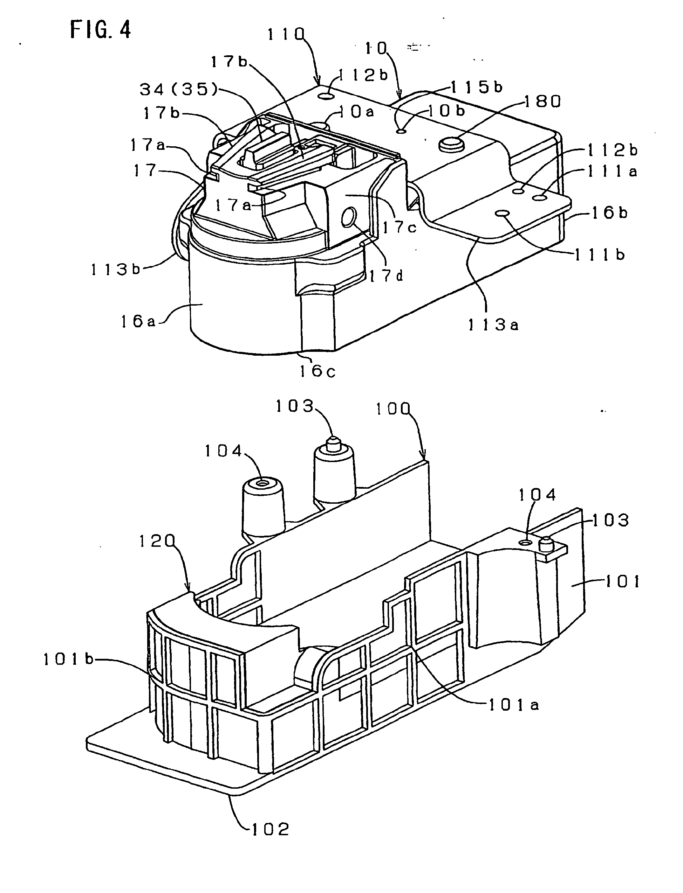

The bracket 110 serves to mount a cover member 100 which will be described later to the housing 10 and, as shown by Figs. 2 and 4, the bracket 110 is provided with a pair of through-holes 111a adapted to receive respective bosses 103 of the cover member 100 and a pair of screw-insertion holes 112b operatively associated with threaded holes 104 of the cover member 100.

The bracket 110 includes a pair of wings 113a, 113b horizontally and vertically extending from opposite ends of a body of the bracket 110, respectively.

Another boss receiving through-hole 111b provided in the horizontally extending wing 113a is adapted to receive a mounting boss (not shown) of a steering column cover 150 and to mount this steering column cover 150 to the lock device 1.

The vertically extending wing 113b is provided with a substantially oval opening 114 to which a clip (not shown) is mounted. The clip serves to hold a harness of a switching device provided within the steering column cover 150.

As will be appreciated from the foregoing description, the bracket 110 may have auxiliary functions in addition to its primary function to secure the cover member 100, which will be described later more in detail, to the lock device 1.

The lock bolt 34 is configured in the form of a square pillar as shown by Figs. 1 and 6 and dimensioned to be inserted into the lock bolt insertion hole 18. The lock bolt 34 has its upper end in the form of an engagement convex 35 adapted to be properly associated with the engagement recess 3 of the steering shaft 2.

The lock bolt 34 is to-and-fro driven by the electric motor 46 via the transmission mechanism between the locked position at which the lock bolt 34 is engaged with the engagement recess 3 provided on the side of the steering shaft 2 and the unlocked position at which the lock bolt 34 is disengaged from the engagement recess 3 of the steering shaft 2.

If the engagement convex 35 is out of alignment with the engagement recess 3 in the circumferential direction when it is desired to bring the engagement convex 35 into engagement with the engagement recess 3, the spring 44 continues to bias the lock bolt 34 to move forward until the engagement recess 3 is aligned with the engagement convex 35 of the lock bolt 34 and, upon alignment, the lock bolt 34 is plunged forward into the engagement recess 3 to effectuate the desired engagement.

According to this embodiment, the lock bolt 34 is to-and-fro driven by the intermediary of a separately provided cam member 39 and, to this end, the lock bolt 34 is provided on its lower portion with a protuberance 36 by which the cam member 39 is coupled to the lock bolt 34.

This coupling protuberance 36 presents a rectangular cross-section is provided with a coupling hole 37 extending through this protuberance 36 orthogonally to the axial direction between opposed walls of the protuberance 36.

The lock bolt 34 is further provided with a notch 38 opposed to the space into which the auxiliary lock member is inserted when the engagement convex 35 is engaged with the engagement recess 3 of the steering shaft 2.

The cam member 39 has a substantially cylindrical shape having its lower portion disposed within the second supporting protuberance 28 of the housing cover 25 and its upper portion disposed within a rotator member 49 which will be described later more in detail.

The lower portion of the cam member 39 is provided on its outer peripheral surface with a plurality of guide ribs 40 at regular intervals in the circumferential direction so as to cooperate with the lock bolt guide grooves 29 of the second supporting protuberance 28.

The cam member 39 is formed with a through-hole 41 extending from its upper end to its lower end in the axial direction in which the lock bolt 34 is to-and-fro movable.

This through-hole 41 has at its upper end a regular shape matching the shape of the coupling protuberance 36 and is provided at a position associated with the coupling hole 37 with a continuous hole 43 (See Fig. 6) adapted to receive a coupling pin 42.

A lower portion of the through-hole 41 is conically shaped so as to receive an end of the spring 44.

The end of the spring 44 is positioned by an end surface of the lock bolt 34 disposed in the upper portion of the through-hole 41.

The cam member 39 is provided on its outer peripheral surface with a pair of helical cam grooves 45 each having a substantially semicircular cross-section opposed to each other in a radial direction.

These cam grooves 4.5 function to convert a rotating force of the rotator member 49 to a linear movement of the lock bolt 34 by intermediary of the cam member 39.

In each of these cam grooves 45, a given region in the vicinity of one end (i.e., lower end) is previously set as the locked region of the steering shaft 2 by the lock bolt 34 and a given region in the vicinity of the other end (i.e., upper end) is previously set as the unlocked region of the steering shaft 2 by the lock bolt 34.

The electric motor 46 serves as a power source to drive the lock bolt 34 and mounted in the space 11 for the control board of the housing by the intermediary of the motor cover 47.

The electric motor 46 normally rotates to move the lock bolt 34 forward and reversely rotates to move back the lock bolt 34. The output shaft thereof is provided with a worm (not shown) in the form of a spiral wheel.

The transmission mechanism serves to transmit a drive force of the electric motor 46 to the lock bolt 34 via the cam member 39 so that the lock bolt 34 may be moved between the locking position and the unlocking position. Specifically, the transmission mechanism comprises the cam grooves of the cam member 39, the rotator member 49 containing this cam member 39 therein in to-and-fro movable manner, and a cam follower 56 interposed between the rotator member 49 and the cam member 39. The rotator member 49 is provided in the form a cylinder having its inner diameter slightly larger than the cam member 39 and interposed between the housing 10 and the housing cover 25 so as to be rotatably supported without being moved in the axial direction.

More specifically, the rotator member 49 has one end 50 (i.e., upper end) adapted to fit to the inner periphery of the first supporting protuberance 19 and the other end 51 (i.e., lower end) adapted to fit to the outer periphery of the second supporting protuberance 28.

The rotator member 49 is further provided around its upper portion with a worm wheel 52 formed around its periphery with a plurality of spiral teeth extending around the outer periphery from the lower portion of the first supporting protuberance 19 containing therein the upper end 50 engaged with the inner periphery thereof.

The worm wheel 52 is engaged with teeth of a worm (not shown) of the electric motor 46 extending in a tangential direction when the electric motor 46 has been mounted to the housing 10 and thereby rotates the rotator member 49 around its axis.

Between the worm wheel 52 and the upper end 50 of the rotator member 49, a groove 53 for securely insertion of the first supporting protuberance 19 is defined.

The worm wheel 52 is formed on its lower portion with a switch cam (not shown) operatively associated with the rotator member 49 to detect a position to which the lock bolt has moved forward.

The rotator member 49 is provided on its inner peripheral surface with a diametrically opposed pair of longitudinal grooves 55 each having a semicircular cross-section extending upward in the axial direction from an inner side lower end defined above the lower end 51.

The cam follower 56 is provided in the form a spherical steel ball and disposed in the longitudinal groove 55 of the rotator member 49 as shown by Figs. 1 and 6.

In a state that a portion of the steel ball 56 exposed from this longitudinal groove 55 is put in the cam groove 45 of the cam member 39, rotation of the rotator 49 causes the longitudinal groove 55 to be rotated in the circumferential direction and thereby causes the steel ball 56 as the cam follower to slide along the cam groove 45 of the cam member 39 restricted to rotate. In this way, the cam follower 56 in the form of the steel ball drives the lock bolt 34 by the intermediary of the cam member 39 to move to-and-fro along the rotational axis of the rotator member 49.

The control board 70 functions to control operation of the electric motor 46 and comprises a microswitch (not shown) cooperating with the rotator member 49 to detect a position to which the lock bolt 34 moved forward and the connector 72 connected to a main microcomputer (ECU) loaded on the vehicle.

In the view of the fact that the lock bolt 34 moves forward or rearward depending on rotation of the rotator member 49, the position to which the lock bolt 34 has moved forward is determined on the basis of ON or Off of the microswitch turned by the switch cam of the rotator member 49 (not illustrated).

The connector 72 is preferably mounted not to project from the housing 10 as well as from the housing cover 25.

In this way, it is possible to prevent the electric components mounted on the control board 70 from destroyed even if a shock is exerted on the connector 72.

The outer end surface 72a of the connector 72 is surrounded by the edge 15a of the notch 15 of the housing 10 and the edge 27a of the wall 27 of the housing cover 25.

In other words, in the housing 10 as well as in the housing cover 25, the position for the connector 72 is in appropriately recessed condition.

Such unique construction advantageously facilitates a pair of the associated connectors to be gropingly connected to each other within a tight space containing therein the lock device 1 and thereby allows a workability to be improved. This is for the reason that the edge 15a of the notch 15 formed in the housing 10 cooperates with the edge 27a of the wall 27 of the housing cover 25 to function as guide means to find the pair of associated connectors by touch.

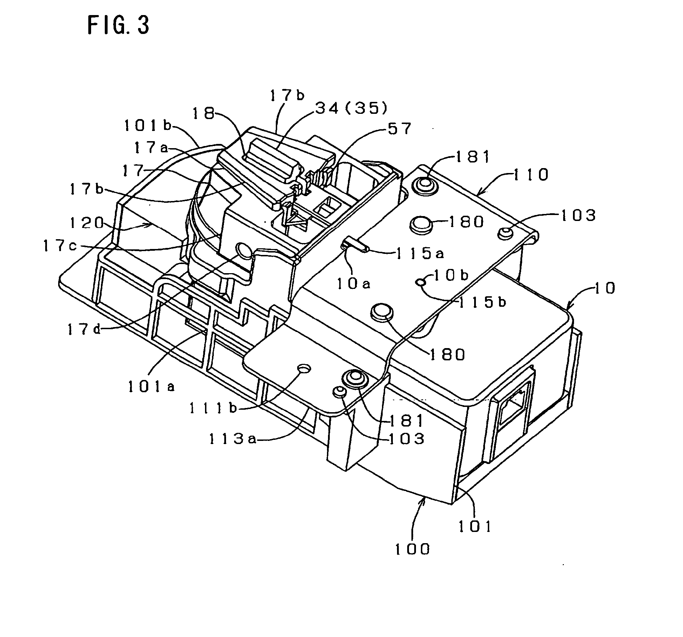

As will be apparent from Figs. 3 and 4, this particular embodiment is characterized in that the cover member 100 integrally comprises the buffering member 120 adapted to cover the front side 16a and the bottom side 16c of the housing 10 and this cover member 100 is integrally mounted on the lock device 1 by the intermediary of the bracket 110.

This cover member 100 is molded from suitable resin material and comprises a rectangular bottom portion 102 and a U-shaped outer peripheral wall consisting of a pair of side walls 101a and a curved wall 101b.

The substantially L-shaped buffering member 120 made of resin foam and having a sufficient thickness to maintain a predetermined elasticity is bonded to the cover member 100 so as to cover the bottom portion 102 and the curved wall 101b of the cover member 100 from within.

The wall 101a of the cover member 100 is provided on its upper region (i.e., upper end as viewed in Fig. 4) with a pair of bosses 103, 103 to be aligned with the respective boss-insertion holes 111a, 111a of the bracket 110 integrally mounted on the housing 10 of the lock device 1 and a threaded hole 104 to be aligned with the screw-insertion hole 112b of the bracket 110.

It will be appreciated by those skilled in the art that the side wall 101a and the curved wall 101b of the cover member 100 are constructed in lattice-shaped fashion in order to reduce rigidity thereof so that the cover member 100 also may have a sufficient elasticity.

As shown by Fig. 5, the steering shaft 2 to which the steering handle (not shown) is provided with an outer column tube 4.

This outer column tube 4 is a member substantially in the form of a rectangular column containing in its inner space the steering shaft 2 axially extends.

A specific construction of the outer column tube 4 will not be described here in detail since it is not directly related to the feature of this embodiment. Briefly, this outer column tube 4 serves to install the lock device 1 and the other devices such as a tilt steering device 130 which will be described later around the steering shaft 2 and additionally serves for position-adjustably connection of the steering shaft 2 to a steering column pipe 140 by the intermediary of a tilt steering device 130 as will be described later and a telescopic steering device (not shown).

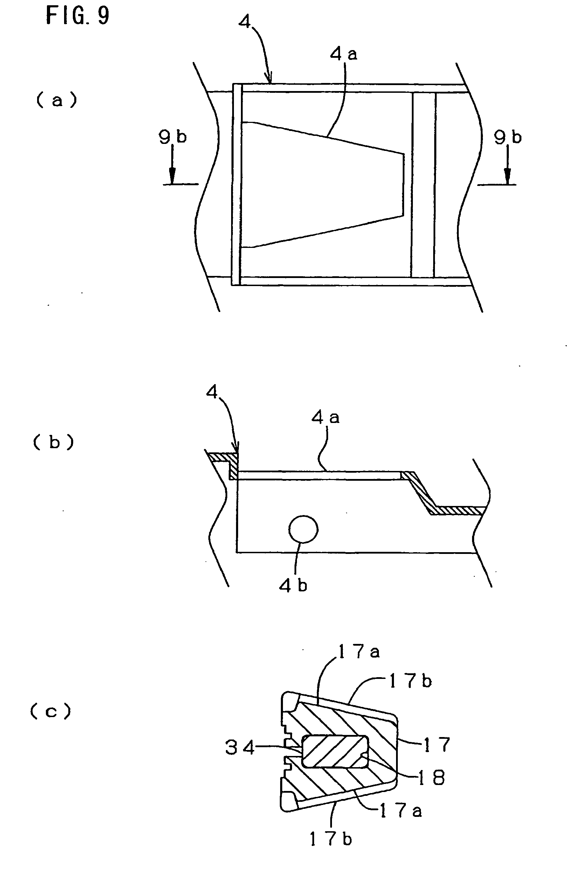

More specifically, as will be seen in Figs. 6 and 9, the outer column tube 4 is provided on its bottom side (i.e, lower side as viewed in Fig. 6) with a slide engagement hole 4a having a trapezoidal shape defined by the same oblique angle as the slide groove 17a of the protuberance 17 so that the collar 17b of the protuberance 17 of the lock device 1 can be engaged therewith.

Opposite side walls extending downward from the slide engagement hole 4a are formed with screw fixing holes 4b associated with the screw-insertion holes 17d of the lock device 1.

As will be appreciated from Fig. 5, the tilt steering device 130 provided within the outer column tube 4 includes a tilt lever 131 extending outward in the vicinity of the lower portion of the steering shaft 2. When the driver sitting on the driver's seat pulls the tilt lever 131, the steering shaft 2 is released so as to be vertically position-adjustable and when the driver lets the tilt lever 131 free from operation at a predetermined position, the tilt lever restores its initial position shown in Fig. 5 by means of a restoring mechanism (not shown) and, in consequence, the steering shaft 2 is brought in a position-locked state.

In this way, the steering handle (not shown) can be adjusted to the desired position for the driver.

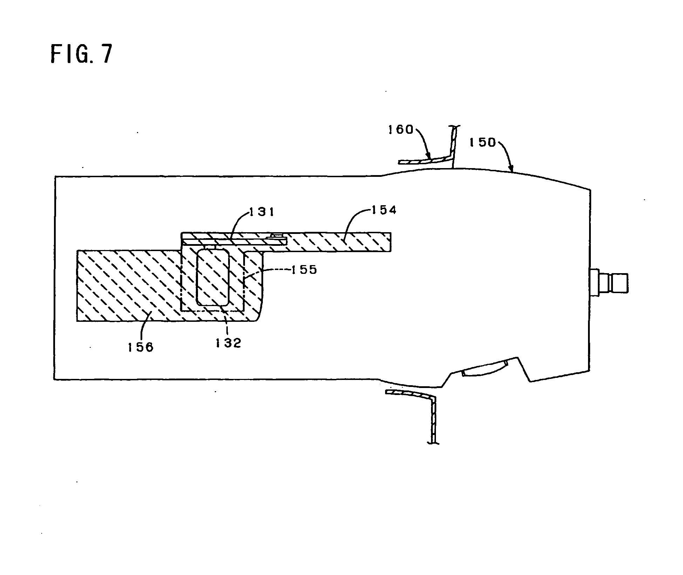

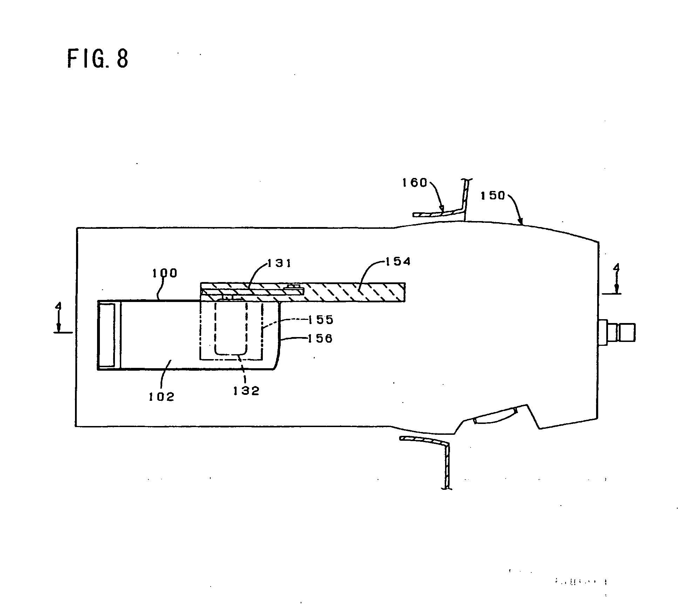

As will be apparent from Figs. 7 and 8, the tilt lever 131 of the tilt steering device 130 operating to lock and release is rotatably supported on the side wall of the tilt steering device 130.

The tilt lever 131 is provided at one end thereof with a control knob 132 adapted to be operated by the driver.

This control knob 132 laterally extends from the side wall on which the tilt lever 131 is rotatably supported.

A particular mechanism to drive the tilt steering device 130 does not directly relate to the present invention and detailed description will be eliminated herein.

Around the steering shaft 2, there is provided a steering column cover 150 adapted to cover the steering shaft 2, the outer column tube 4 and the tilt steering device 130 so that these components may be invisible externally.

Specifically, this steering column cover 150 comprises a substantially inverted U-shaped upper cover 151 and a lower cover 152 welded together.

The front side wall on the driver's side (i.e., right side as viewed in Fig. 5), the cover 150 is formed with a shaft-insertion hole 153 through which the steering shaft 2 extends outward.

The steering column cover 150 is assembled integrally with the outer column tube 4, the bracket 110 of the lock device 1 and the steering shaft 2 by means of, for example, fixing bolts.

The rear end (i.e., front side of the vehicle) of the upper cover 151 is housed within an instrument panel 160 disposed on a front side (i.e., left side as viewed in Fig. 5).

The rear end of the lower cover 152, on the other hand, extends below the driver' s seat so as to cover the steering shaft 2.

In this manner, the steering column cover 150 cooperates with the instrument panel 160 to decorate the front side of the driver's seat.

As shown by Figs. 7 and 8, the lower cover 152 of this steering column cover 150 is formed with a lever operating hole 154 through which the tilt lever 131 extends outward and, in addition, formed with a knob-insertion hole 155 through which the control knob 132 of the tilt lever 131 can be inserted when the steering column cover 150 is mounted on the steering shaft 2.

In the illustrated embodiment, this knob-insertion hole 155 is provided as a portion of a lock device installed recess 156.

The lever operating hole 154 is provided in the form of a slot longer than a stroke of the tilt lever 131 being driven.

This is based on the assumption that the tilt steering device 130 and the telescopic steering device (not shown) used to position-adjust the steering shaft 2 in its axial direction are usually loaded on the vehicle. Specifically, the lever operating hole 154 may be formed in the manner as mentioned above to meet the requirement that a position-adjustable range in which the steering shaft 2 can be moved in its axial direction should cover a range in which the tilt lever 131 can be moved in its axial direction.

The steering shaft 2 integrally comprises the steering column cover 150, the outer column tube 4, the lock device 1, the tilt steering device 130 and the other components and therefore these components such as the steering column cover 150 are position-adjusted together with the steering shaft 2 by means of the tilt steering device 130 and the telescopic steering device.

To assemble the lock device 1 as has been described above, first, the lock bolt 34 and the cam follower 56 integrally coupled to the cam member 39 are assembled to the rotator member 49 and then this assembly is disposed in the space 16 for the lock mechanism within the housing 10.

Subsequently, the electric motor 46 is installed within the housing 10 and then the motor cover 47 is screw-fixed to the housing 10.

Now the control board 70 is disposed outside the motor cover 7 and the control board 70 is clamped between the housing 10 and the cover 25 by screw-fixing the cover 25 to the housing 10.

The auxiliary lock mechanism 57 is disposed in the space for the auxiliary lock mechanism within the housing 10.

The housing cover 25 is screw-fixed to the housing 10.

In this case, the locking prong 32 is plunged into the through-hole 20 until the distal end of the locking prong 32 passes through-hole 20.

Then the distal end of the locking prong 32 of the housing cover 25 is put into engagement with the auxiliary lock member 57.

Thereafter, the bracket 110 is screw-fixed to the upper wall of the space 11 for the control board of the housing 10 by inserting the fixing bolts 180 through-holes 112a and the associated threaded holes 10c.

In the course of this operation, the positioning ribs 10a, 10b projecting on the housing 10 are engaged with the positioning groove 115a and the positioning hole 115b of the bracket 110 to position the bracket 110 on the housing 10. In this way, the bracket 110 can be easily mounted on the housing 10 by the fixing bolts 180.

To the lock device 1 assembled in this manner, the cover member 100 having its inner surface previously provided with the buffering member 120 integrally bonded by means of adhesive or the like is assembled.

Specifically, the bosses 103 of the cover member 100 are engaged with the boss-insertion holes 111a of the bracket 110.

Then fixing bolts 181 are threadably engaged with the threaded holes 104 of the cover member 100 by the intermediary of the screw-insertion holes 112b of the bracket 110.

In this way, the buffering member 120 is integrally fixed to the housing 10 so as to lie on the front wall 16a and the bottom wall 16c of the space 16 for the lock mechanism.

Now steps to be followed to assemble the lock device 1 to the steering shaft 2 will be described.

It should be understood that the tilt steering device 130 has previously been incorporated in the steering shaft 2 before the lock device 1 is assembled to the steering shaft 2.

In a first step, the protuberance 17 of the lock device 1 having the cover member 100 attached thereto is inserted into the slide engagement hole 4a formed in the front portion of the outer column tube 4 of the steering shaft 2.

The inner edge of the slide engagement hole 4a is aligned with the slide groove 17a of this protuberance 17 and slidably pulled (toward the driver's seat).

In consequence, the inner edge of the slide engagement hole 4a is engaged with the slide groove 17a and the lock device 1 is held in the slide engagement hole 4 a by means of the collar 17b of the protuberance 17.

In this state, the threaded holes 17d formed in the convex portions 17c of the protuberance 17 are positioned to overlap the screw-fixing holes 4b of the outer column tube 4 so that the lock device 1 can be fixed to the outer column tube 4 by threadably engaging the bolts 180 with the threaded holes 17d by the intermediary of the fixing holes 4b.

Preferably, as the bolts 170 used to fix the lock device 1 to the outer column tube 4, so-called threaded bolts of which the heads are broken under a given torque are used.

In this way, it is impossible to remove the bolts lying at lower portion of the steering shaft 2 and, in addition, it is difficult to destroy the lock device 1 externally since the lock device 1 is firmly secured to the outer column tube 4 made of metal plate.

As will be apparent from Fig. 5, the steering shaft 2 is usually positioned so that the steering handle (not shown) extends somewhat obliquely relative to the instrument panel 160.

As a result, the front wall 16a and the bottom wall 16c of the space 16 for the lock mechanism of the housing 10 covered with the buffering member 120 of the cover member 100 are positioned aside toward the driver's seat.

Even if the driver is thrown forward and the driver' s knees collide against the lock device 1 under an impact due to collision accident of the vehicle while the vehicle is running, the buffering member 120 effectively absorb such impact and protects the driver from any serious damage.

According to the illustrated embodiment, the cover member 100 and the buffering member 120 may be formed so as to cover not only the bottom wall 16b of the space 16 for the lock mechanism but the entire bottom wall of the housing 10 to assure the safety against the secondary collision.

In a final step, the connector of the vehicle may be connected to the connector 72 of the lock device 1 to complete the operation of assembling.

In this step, as previously described, the connectors must be gropingly connected together in a limited space but the edge 15a of the notch 15 formed in the housing 10 cooperates with the edge 27a of the wall section 27 formed in the housing cover 25 to function as the guiding means for operation of connecting the associated connectors. In this way, operation of assembly is thereby facilitated.

Now procedure to assemble the steering column cover 150 to the steering shaft 2 will be described below.

First, the upper cover 151 and the lower cover 152 of the steering column cover 150 are attached from above and below to the outer column tube 4.

In this step, as shown by Fig. 7, the control knob 132 of the tilt lever 131 is inserted into the knob-insertion hole 155 formed in the lower cover 152 and the tilt lever 131 is inserted into the lever driving hole 154.

The lower cover 152 may be attached to the outer column tube 4 at a predetermined position by threadable engagement of the fixing bolts or the like to ensure that the cover member 100 of the lock device 1 attached to the region defined above the knob-insertion hole 155 is positioned to close the lock device installed recess 156 including the knob-insertion hole 154.

In this case, the bottom portion 102 of the cover member 100 of the lock device 1 is preferably coplanar with the bottom of the lower cover 152.

Such coplanar construction is effective to prevent, without provision of any addition means, the steering shaft 2 and the other components from being visible externally since the knob-insertion hole 155 except the lever driving hole 154 is closed with the bottom portion 102 of the cover member 100.

The cover member 100 may be constructed so that the bottom portion 102 of the cover member 100 is coplanar and integral with the bottom portion of the lower cover 152 to prevent the design quality from being deteriorated.

The buffering member 120 attached to the cover member 100 requires a sufficient thickness to absorb any serious impact.

In consequence, a clearance gap between the steering shaft 2 and the lower cover 152 can be efficiently filled.

Now the lock/unlock operation of the lock device 1 attached to the steering shaft 2, i.e., the manner in which the lock bolt 3 4 is engaged with the engagement recess 3 of the steering shaft 2 and disengaged from this recess 3 will be discussed.

When the engine start is allowed by operation carried out by the driver, the electric motor 46 drives to rotate the rotator member 49 via the worm mounted on the electric motor 46 and the cam follower 56 moves integrally with the rotator member 49 along the cam groove 45 of the cam member 39.

The lock bolt 34 is driven in the axial direction (in this case, the direction in which the engagement convex 35 of the lock bolt 34 moves apart from the engagement recess 3 of the steering shaft 2) as the cam follower 56 moves along the cam groove 45.

Vibration generated due to drive of the electric motor 46 and vibration generated due to movement of the cam follower 56 along the cam groove 45 of the cam member 39 are transmitted to the housing 10 and thereby an operation sound is generated.

However, the front wall 16a and the bottom wall 16c of the space for the lock mechanism are completely covered with the buffering member 120 having elasticity, so that the operation sound generated within the housing is absorbed by the buffering member 120. In this way, an operation sound possibly leaking out from the lock device 1 due to operation of the electric motor 46 can be effectively alleviated.

The buffering member 120 may be constructed to come in close contact with the housing 10 to ensure that vibration transmitted to the housing 10 is absorbed by the buffering member 120.

With such construction, the vibration transmitted to the housing 10 during operation of the electric motor 46 can be absorbed by the buffering member 120 and thereby the operation sound generated from the lock device 1 can be further alleviated.

The steering lock device according to the invention is not limited to the particular embodiment as has been described above but may be implemented in various modified modes.

For example, while the front side 16a and the bottom side 16c of the housing 10 lying on the side of the driver's seat are covered with the buffering member 120 according to the illustrated embodiment, it is possible to cover also the side surface of the space 11 for the control board in which the electric motor 45 is disposed with the buffering member 120.

With such construction, vibration generated during operation of the electric motor 46 can be reliably absorbed by the buffering member 120 and the actuation sound generated within and leaking out from the lock device 1 can be also further alleviated.

In view of the fact that the lock device 1 lies between the driver's feet, the entire side surface of the housing 10 may be covered with the buffering member 120 to assure also the safety against the secondary lateral collision with the lock device 1.

While the cover member 100 is attached to the bracket 110 which is, in turn, mounted on the housing 10 according to the illustrated embodiment, it is possible to provide the housing 10 with the boss insertion holes 111a and the screw-insertion holes 112b so that the cover member 100 may be attached directly to the housing 10.

While the cover member 100 presents a substantially rectangular contour in the illustrated embodiment, the contour of the cover member 100 is not limited to this.

For example, the side surface of the cover member 100 may be curved to describe a substantially elliptic arc.

It is also possible to fix the bracket only by screws without use of the bosses 103.

While the knob-insertion holes 155 of the lower cover 152 is provided in a part of a lock device installed recess 156 in the illustrated embodiment, it is also possible to provide on the knob-insertion hole 155 and to cover the knob-insertion hole 155 with the cover member 100 from the inner side of the lower cover 152.

In this case, however, the lower cover 152 will be undesirably formed on its outer surface with a concave step. To avoid this, the region of the bottom portion 102 of the cover member 100 to be engaged with the knob-insertion hole 155 is preferably formed to be convex so that such convex region may be engaged with the knob-insertion hole 155 to close the knob-insertion hole 155.

While the buffering member 120 is made of resin foam in the illustrated embodiment, it is possible to use rubber or the like so far as this buffering member 120 is elastic.

## Claims

1. A steering lock device comprising:
a lock bolt (34) adapted to be to-and-fro movable between a locked position at which the lock bolt is engaged with a steering shaft coupled to a steering wheel and an unlocked position at which such engagement is released,
an actuator (46) causing said lock bolt (34) to move,
a transmission mechanism adapted to transmit a driving force from said actuator to said lock bolt so as to move said lock bolt toward the locked position or the unlocked position, and
a housing (10) with a cover (25) adapted to house at least said lock bolt, said actuator and said transmission mechanism,
**characterized in that** the device further comprises:
a cover member (100) adapted to cover side walls (16a) and a bottom (16c) of said housing (10), and
an elastic buffering member (120) provided between said cover member and said housing (10).

2. The steering lock device according to Claim 1, further comprises:
a steering column pipe rotatably supporting said steering shaft,
a position-adjusting device adapted to position-adjusting said steering shaft in a vertical direction of said steering column pipe,
a control lever provided at one end with a control knob adapted to be operated so as to switch said position-adjusting device between a position-adjustable state and a position-nonadjustable state in a selective manner,
a steering column cover integrally attached to said steering shaft so as to cover said steering shaft, said position-adjusting device and said control lever,
a control lever insertion hole and a control knob insertion hole provided in the bottom of said steering column cover, and
said control knob insertion hole is closed with said cover member of said steering lock device mounted on said steering shaft.

3. The steering lock mechanism according to Claim 1, wherein said buffering member is made of elastic material such as resin foam or rubber.

4. The steering lock mechanism according to Claim 1, wherein said cover member is formed so as to cover the bottom and a part of said housing.

5. The steering lock mechanism according to Claim 1, wherein said buffering member is provided between said housing and said cover member so as to cover the bottom and the side walls of said housing.

## Patentansprüche

1. Lenkradschlossvorrichtung, umfassend:
einen Verriegelungsbolzen (34), der so ausgebildet ist, dass er zwischen einer versperrten Position, bei welcher der Verriegelungsbolzen mit einer Lenkwelle, die mit einem Lenkrad verbunden ist, im Eingriff ist, und einer unversperrten Position, bei welcher solch ein Eingriff gelöst ist, hin- und herbewegbar ist,
einen Stellantrieb (46), der den Verriegelungsbolzen (34) veranlasst, sich zu bewegen,
einen Kraftübertragungsmechanismus, der ausgebildet ist, um eine Antriebskraft vom Stellantrieb zum Verriegelungsbolzen zu übertragen, sodass der Verriegelungsbolzen in die versperrte Position oder die unversperrte Position bewegt wird, und
ein Gehäuse (10) mit einer Abdeckung (25) zur Unterbringung von zumindest dem Verriegelungsbolzen, dem Stellantrieb und dem Kraftübertragungsmechanismus,
**dadurch gekennzeichnet, dass** die Vorrichtung weiters Folgendes umfasst:
ein Abdeckungselement (100), das ausgebildet ist, um Seitenwände (16a) und eine Unterseite (16c) des Gehäuses (10) abzudecken, und
ein elastisches Dämpfungselement (120), das zwischen dem Abdeckungselement und dem Gehäuse (10) bereitgestellt ist.

2. Lenkradschlossvorrichtung nach Anspruch 1, weiters Folgendes umfassend:
eine Lenksäulenstange, welche die Lenkwelle drehbar lagert,
eine Positionseinstellungsvorrichtung, die ausgebildet ist, um die Position der Lenkwelle in vertikaler Richtung der Lenksäulenstange einzustellen,
einen Bedienungshebel, der an einem Ende mit einem Bedienungsknopf versehen ist, der ausgebildet ist, um bedient zu werden, sodass die Positionseinstellungsvorrichtung auf selektive Weise zwischen einem positionseinstellbaren Zustand und einem nichtpositionseinstellbaren Zustand umgeschaltet werden kann,
eine Lenksäulenabdeckung, die einstückig mit der Lenkwelle verbunden ist, um die Lenkwelle, die Positionseinstellungsvorrichtung und den Bedienungshebel abzudecken,
eine Bedienungshebel-Einführungsöffnung und eine Bedienungsknopf-Einführungsöffnung, die an der Unterseite der Lenksäulenabdeckung bereitgestellt sind,
wobei die Bedienungsknopf-Einführungsöffnung mit dem Abdeckungselement der Lenkradschlossvorrichtung abgedeckt ist, das an der Lenkwelle befestigt ist.

3. Lenkradschlossvorrichtung nach Anspruch 1, wobei das Dämpfungselement aus elastischem Material, wie z.B. Harzschaum oder Kautschuk, besteht.

4. Lenkradschlossvorrichtung nach Anspruch 1, wobei das Abdeckungselement ausgebildet ist, um die Unterseite und einen Teil des Gehäuses abzudecken.

5. Lenkradschlossvorrichtung nach Anspruch 1, wobei das Dämpfungselement zwischen dem Gehäuse und dem Abdeckungselement bereitgestellt ist, sodass die Unterseite und die Seitenwände des Gehäuses abgedeckt sind.

## Revendications

1. Dispositif de verrouillage de direction comprenant:
un boulon de verrouillage (34) apte à être déplaçable vers l'avant et vers l'arrière entre une position verrouillée dans laquelle le boulon de verrouillage est en prise avec un arbre de direction couplé à un volant de direction et une position déverrouillée dans laquelle une telle prise est relâchée,
un actionneur (46) amenant ledit boulon de verrouillage (34) à se déplacer,
un mécanisme de transmission apte à transmettre une force d'entraînement dudit actionneur audit boulon de verrouillage de manière à amener ledit boulon de verrouillage vers la position verrouillée ou la position déverrouillée, et
un boîtier (10) avec un couvercle (25) apte à loger au moins ledit boulon de verrouillage, ledit actionneur et ledit mécanisme de transmission,
**caractérisé en ce que** le dispositif comprend en outre:
un élément de recouvrement (100) apte à couvrir des parois latérales (16a) et un fond (16c) dudit boîtier (10), et
un élément tampon élastique (120) réalisé entre ledit élément de recouvrement et ledit boîtier (10).

2. Dispositif de verrouillage de direction selon la revendication 1, comprenant en outre:
un tube de colonne de direction supportant en rotation ledit arbre de direction,
un dispositif d'ajustement de position apte à ajuster la position dudit arbre de direction dans une direction verticale dudit tube de colonne de direction,
un levier de commande muni à une extrémité d'un bouton de commande apte à être actionné de manière à commuter ledit dispositif d'ajustement de position entre un état dans lequel la position peut être ajustée et un état dans lequel la position ne peut pas être ajustée d'une manière sélective,
un couvercle de colonne de direction fixé intégralement audit arbre de direction de manière à couvrir ledit arbre de direction, ledit dispositif d'ajustement de position et ledit levier de commande,
un trou d'insertion de levier de commande et un trou d'insertion de bouton de commande réalisé dans le fond dudit couvercle de colonne de direction, et
ledit trou d'insertion de bouton de commande est fermé par ledit élément de recouvrement dudit dispositif de verrouillage de direction monté sur ledit arbre de direction.

3. Mécanisme de verrouillage de direction selon la revendication 1, dans lequel ledit élément tampon est réalisé en matériau élastique, comme en mousse de résine ou caoutchouc.

4. Mécanisme de verrouillage de direction selon la revendication 1, dans lequel ledit élément de recouvrement est formé de manière à couvrir le fond et une partie dudit boîtier.

5. Mécanisme de verrouillage de direction selon la revendication 1, dans lequel ledit élément tampon est réalisé entre ledit boîtier et ledit élément de recouvrement de manière à couvrir le fond et les parois latérales dudit boîtier.
